# EUROPEAN PATENT APPLICATION

(11) **EP 4 421 111 A1**
(43) Date of publication of application: **28.08.2024**
(21) Application number: 22883479.2
(22) Date of filing: 14.10.2022
(51) Int. Cl.: C08G 77/60, C08G 59/02

(54) **POLYMER, RESIN COATING, AND DRY FILM**

(30) Priority: 18.10.2021 JP 2021170161
(71) Applicant: SHIN-ETSU CHEMICAL CO., LTD., Tokyo 1000005 (JP)
(72) Inventor: MARUYAMA Hitoshi, Annaka-shi, Gunma 379-0224 (JP); OMORI Hiroto, Annaka-shi, Gunma 379-0224 (JP)
(74) Representative: Ter Meer Steinmeister & Partner
(86) International application number: PCT/JP2022/038300
(87) International publication number: WO 2023/068175

(57) **Abstract**

Provided is a polymer wherein the main chain contains a silphenylene backbone, an epoxy group-containing isocyanuric acid backbone, and a norbornene backbone, and does not contain a siloxane backbone.

## Description

### TECHNICAL FIELD

This invention relates to a polymer, a resin coating, and a dry film.

### BACKGROUND ART

From the past, transparent epoxy resins are used as an encapsulating protective material or adhesive for a variety of optical devices, typically light emitting diodes (LEDs) and CMOS image sensors.

Because of the recent progress of optical devices like LEDs toward higher power, the encapsulants are required to have higher transparency and light resistance than in the prior art in order to suppress gas emission and discoloration. Epoxy-modified silicone resins (Patent Documents 1 and 2) are exemplified as having high transparency and light resistance.

On the other hand, optical devices are tailored to more complicated structures. They must be encapsulated flat on a substrate having rugged or stepped portions of LEDs or wiring without entraining voids. Although resins which can be supplied in dry film form are required, the epoxy-modified silicone resins described in Patent Documents 1 and 2 are difficult to manufacture a protective film-bearing dry film.

### PRIOR ART DOCUMENTS

### PATENT DOCUMENTS

Patent Document 1: JP-A 2020-094168
Patent Document 2: JP-A 2020-090649

### SUMMARY OF INVENTION

### TECHNICAL PROBLEM

An object of the invention, which has been made under the above-mentioned circumstances, is to provide a polymer which not only has high transparency and light resistance, but can also be manufactured as a protective film-bearing dry film.

### SOLUTION TO PROBLEM

Making extensive investigations to attain the above object, the inventors have found that the outstanding problem can be solved by a polymer having a backbone consisting of a silphenylene skeleton, an epoxy-containing isocyanuric acid skeleton, and a norbornene skeleton. The invention is predicated on this finding.

Accordingly, the invention provides a polymer, resin coating, and dry film as defined below.
1. A polymer having a backbone which contains a silphenylene skeleton, an epoxy-containing isocyanuric acid skeleton, and a norbornene skeleton, and is free of a siloxane skeleton.
2. The polymer of 1, having a weight average molecular weight of 3,000 to 100,000.
3. The polymer of 1 or 2, comprising repeat units having the formula (A1) and repeat units having the formula (A2): 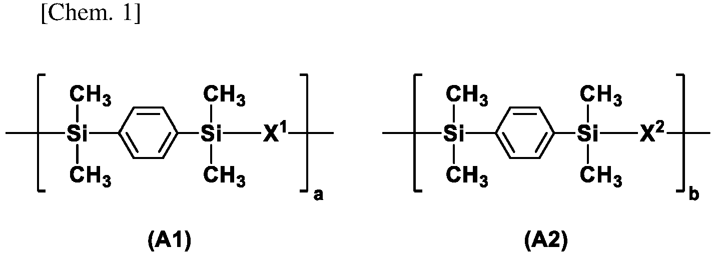
   wherein a and b are positive numbers meeting 0 < a < 1, 0 < b < 1, and a+b = 1,
      X¹ is a divalent group having the formula (X1): 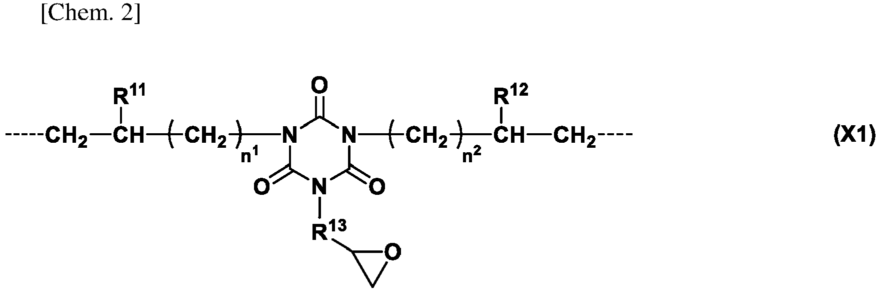
   wherein R¹¹ and R¹² are each independently hydrogen or methyl, R¹³ is a C₁-C₈ hydrocarbylene group in which an ester bond or ether bond may intervene in a carbon-carbon bond, n¹ and n² are each independently an integer of 0 to 7, the broken line designates a valence bond, and
      X² is a divalent group having the formula (X2): 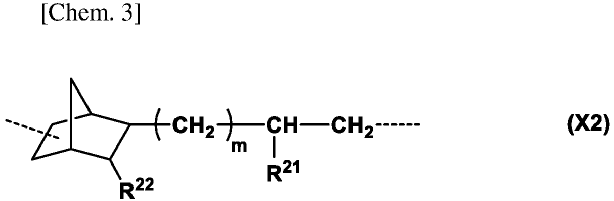
   wherein R²¹ and R²² are each independently hydrogen or a C₁-C₂₀ saturated hydrocarbyl group which may contain a heteroatom, m is 0 or an integer of 1 to 10, and the broken line designates a valence bond.
4. The polymer of 3 wherein a is 0 < a ≤ 0.35.
5. A resin coating comprising the polymer of any one of 1 to 4.
6. The resin coating of 5 wherein the coating having a thickness of 10 µm has a transmittance of at least 95% to light of wavelength 405 nm.
7. A protective film-bearing dry film comprising a support film, the resin coating of 5 on the support film, and a protective film on the resin coating.

### ADVANTAGEOUS EFFECTS OF INVENTION

The polymer of the invention has high transparency and light resistance and can be manufactured as a protective film-bearing dry film.

### [Polymer]

The invention provides a polymer having a backbone which contains a silphenylene skeleton, an epoxy-containing isocyanuric acid skeleton, and a norbornene skeleton, and is free of a siloxane skeleton.

The polymer preferably comprises repeat units having the formula (A1), referred to as repeat units A1, hereinafter, and repeat units having the formula (A2), referred to as repeat units A2, hereinafter.

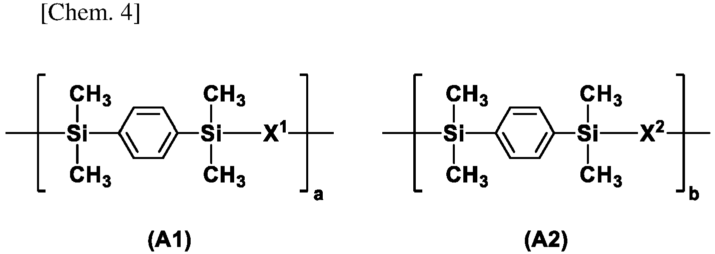

In formulae (A1) and (A2), "a" and "b" are positive numbers meeting 0 < a < 1, 0 < b < 1, and a+b = 1. Preferably "a" is 0 < a ≤ 0.35. As long as "a" is in the range, the polymer is fully soluble in common organic solvents, leading to ease of handling.

In formula (A1), X¹ is a divalent group having the formula (X1).

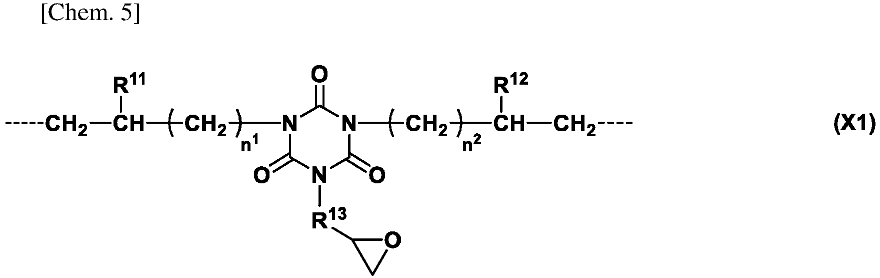

The broken line designates a valence bond.

In formula (X1), R¹¹ and R¹² are each independently hydrogen or methyl, preferably hydrogen.

In formula (X1), R¹³ is a C₁-C₈ hydrocarbylene group in which an ester bond or ether bond may intervene in a carbon-carbon bond, but preferably an ester bond or ether bond does not intervene in a carbon-carbon bond. The hydrocarbylene group may be straight, branched or cyclic, and examples thereof include alkanediyl groups such as methylene, ethane-1,1-diyl, ethane-1,2-diyl, propane-1,2-diyl, propane-1,3-diyl, butane-1,2-diyl, butane-1,3-diyl, and butane-1,4-diyl. Inter alia, methylene or ethylene is preferred as R¹³, with methylene being most preferred.

In formula (X1), n¹ and n² are each independently an integer of 0 to 7, preferably 0, 1 or 2.

In formula (A2), X² is a divalent group having the formula (X2).

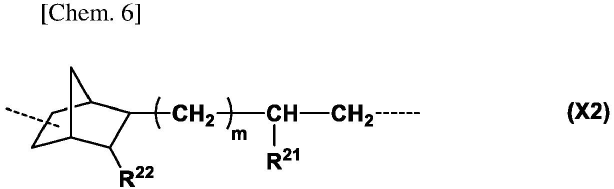

The broken line designates a valence bond.

In formula (X2), R²¹ and R²² are each independently hydrogen or a C₁-C₂₀ saturated hydrocarbyl group which may contain a heteroatom. The saturated hydrocarbyl group may be straight, branched or cyclic. Examples thereof include C₁-C₂₀ alkyl groups such as methyl, ethyl, n-propyl, isopropyl, n-butyl, isobutyl, sec-butyl, tert-butyl, n-pentyl, n-hexyl, n-heptyl, n-octyl, n-nonyl, and n-decyl; and C₃-C₂₀ cyclic saturated hydrocarbyl groups such as cyclopropyl, cyclobutyl, cyclopentyl, cyclohexyl, norbornyl and adamantyl. The saturated hydrocarbyl group may contain a heteroatom. Specifically, some or all of the hydrogen atoms in the saturated hydrocarbyl group may be substituted by halogen atoms such as fluorine, chlorine, bromine or iodine, and a carbonyl moiety, ether bond or thioether bond may intervene between carbon atoms in the saturated hydrocarbyl group. Hydrogen or methyl is preferred as R²¹ and R²².

In formula (X2), m is an integer of 0 to 10, preferably 0, 1 or 2.

The polymer should preferably have a weight average molecular weight (Mw) of 3,000 to 100,000, more preferably 5,000 to 50,000. As long as Mw is in the range, a tack-free solid polymer having flexibility is obtained, which can be manufactured into a protective film-bearing dry film. As used herein, Mw is measured by gel permeation chromatography (GPC) versus polystyrene standards using tetrahydrofuran as eluent.

The polymer of the invention may be one in which repeat units A1 and A2 are randomly or alternately arranged, and may contain a plurality of blocks of each unit.

### [Method of preparing polymer]

The polymer is obtained from addition polymerization of a compound having the formula (1), a compound having the formula (2), and a compound having the formula (3) in the presence of a metal catalyst. 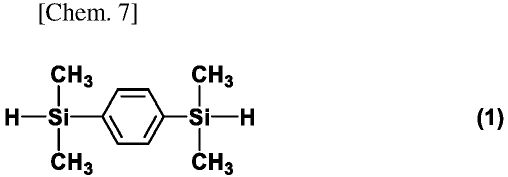 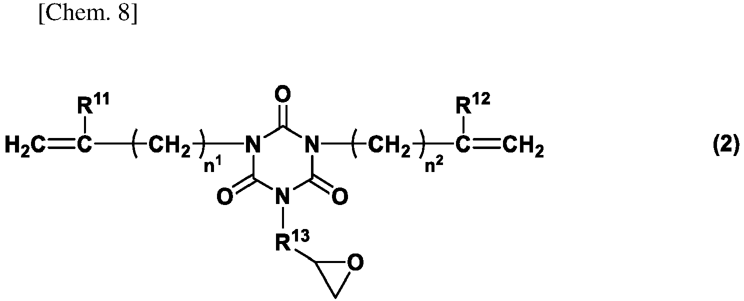 Herein, R¹¹ to R¹³, n¹ and n² are as defined above. 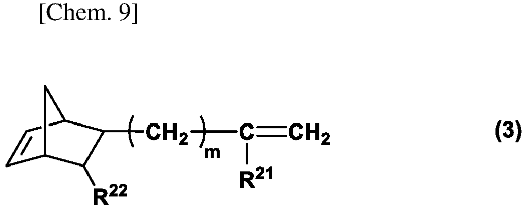 Herein, R²¹, R²², and m are as defined above.

Examples of the metal catalyst which can be used herein include platinum group metals alone such as platinum (inclusive of platinum black), rhodium and palladium; platinum chloride, chloroplatinic acid and chloroplatinic acid salts such as H₂PtCl₄·xH₂O, H₂PtCl₆·xH₂O, NaHPtCl₆·xH₂O, KHPtCl₆·xH₂O, Na2PtCl₆·xH₂O, K₂PtCl₄·xH₂O, PtCl₄·xH₂O, PtCl₂, and Na₂HPtCl₄·xH₂O, wherein x is preferably an integer of 0 to 6, more preferably 0 or 6; alcohol-modified chloroplatinic acid (see USP 3,220,972); complexes of chloroplatinic acid with olefins (see USP 3,159,601, USP 3,159,662, and USP 3,775,452); platinum group metals such as platinum black and palladium on carriers such as alumina, silica and carbon; rhodium-olefin complexes; chlorotris(triphenylphosphine)rhodium known as Wilkinson catalyst; and complexes of platinum chloride, chloroplatinic acid or chloroplatinic acid salts with vinyl-containing siloxanes, especially vinyl-containing cyclic siloxanes.

The catalyst is used in a catalytic amount, and often preferably in an amount of 0.001 to 0.1% by weight of platinum group metal based on the total weight of compounds having formulae (1), (2) and (3). In the polymerization reaction, a solvent may be used if necessary. Hydrocarbon base solvents such as toluene and xylene are preferred as the solvent. The polymerization conditions are selected from the aspects of not deactivating the catalyst and completing polymerization within a short time. The polymerization temperature is preferably 40 to 150°C, more preferably 60 to 120°C. While the polymerization time varies with the type and amount of the polymer, it is preferred to complete polymerization in about 0.5 to 100 hours, especially 0.5 to 30 hours, in order to prevent moisture from entering the polymerization system. After the polymerization is completed in this way, the polymer is obtained by distilling off the solvent if used.

Although the reaction procedure is not particularly limited, the preferred procedure involves mixing the compound having formula (2) with the compound having formula (3), heating the mixture, adding the metal catalyst to the mixture, and then adding dropwise the compound having formula (1) to the mixture over 0.1 to 5 hours.

The starting compounds are preferably blended in such amounts that the molar ratio of hydrosilyl group in the compound having formula (1) to the total of alkenyl groups in the compound having formula (2) and the compound having formula (3) may range from 0.67 to 1.67, more preferably from 0.83 to 1.25. The Mw of the polymer can be controlled by using a monoallyl compound (e.g., o-allylphenol), monohydrosilane (e.g., triethylhydrosilane) or monohydrosiloxane as a molecular weight modifier.

### [Resin coating]

A resin coating is obtained from the inventive polymer by dissolving the polymer in a solvent to form a resin solution, coating the solution onto a substrate such as a silicon, glass, or metal (e.g., iron, copper, nickel or aluminum) substrate, and heating at a temperature in the range of 80 to 300°C for film formation. The coating technique may be any of well-known techniques such as dipping, spin coating and roll coating. The resin solution preferably has a polymer concentration of 10 to 70% by weight, more preferably 20 to 60% by weight. The coating weight of the resin solution is selected as appropriate for a particular purpose and preferably such that the resulting resin coating may have a thickness of 0.1 to 200 µm, more preferably 1 to 150 µm. It is preferred that the resulting resin coating have high transparency as demonstrated by a transmittance of at least 95% to light of wavelength 405 nm when the coating has a thickness of 10 µm. When light is continuously irradiated to such a resin coating at high temperature, there arise no problems such as oil bleeding.

The solvent used herein is not particularly limited as long as the polymer can be dissolved therein. Exemplary solvents include ketones such as cyclohexanone, cyclopentanone, and methyl-2-n-pentyl ketone; alcohols such as 3-methoxybutanol, 3-methyl-3-methoxybutanol, 1-methoxy-2-propanol, and 1-ethoxy-2-propanol; ethers such as propylene glycol monomethyl ether (PGME), ethylene glycol monomethyl ether, propylene glycol monoethyl ether, ethylene glycol monoethyl ether, propylene glycol dimethyl ether, and diethylene glycol dimethyl ether; and esters such as propylene glycol monomethyl ether acetate (PGMEA), propylene glycol monoethyl ether acetate, ethyl lactate, ethyl pyruvate, butyl acetate, methyl 3-methoxypropionate, ethyl 3-ethoxypropionate, tert-butyl acetate, tert-butyl propionate, propylene glycol mono-tert-butyl ether acetate, and γ-butyrolactone. Inter alia, ethyl lactate, cyclohexanone, cyclopentanone, PGMEA, and γ-butyrolactone are preferred. The organic solvents may be used alone or in admixture.

### [Dry film]

The invention further provides a protective film-bearing dry film which is defined as comprising a support film, the resin coating disposed on the support film, and a protective film disposed on the resin coating.

Since the resin coating is free of any solvent, the risk that bubbles resulting from volatilization of the solvent are left within the resin coating or between the resin coating and a rugged or stepped substrate is eliminated.

It is preferred from the aspects of flatness on a rugged or stepped substrate, step coverage, and substrate lamination spacing that the resin coating have a thickness of 5 to 200 µm, more preferably 10 to 100 µm.

Also, the viscosity and fluidity of the resin coating are closely related. The resin coating exhibits appropriate fluidity in an appropriate viscosity range so that it may penetrate deeply in narrow gaps. In some cases, the resin softens to enhance the bond to the substrate. Therefore, from the aspect of fluidity, the resin coating preferably has a viscosity of 10 to 5,000 Pa·s, more preferably 30 to 2,000 Pa·s, even more preferably 50 to 300 Pa·s at 80 to 120°C. As used herein, the viscosity is measured by a rotational viscometer.

When the dry film is closely bonded to a rugged or stepped substrate, the resin coating is coated on the substrate in conformity with rugged portions or steps, achieving high flatness. Since the resin coating is characterized by a low viscoelasticity, a higher flatness is achievable. Further, when the resin coating is closely bonded to the substrate in a vacuum environment, the generation of gaps therebetween is effectively prohibited.

The dry film can be manufactured by coating the resin solution onto a support film and drying the solution to form a resin coating. An apparatus for manufacturing the dry film may be a film coater commonly used in the manufacture of pressure-sensitive adhesive products. Suitable film coaters include, for example, a comma coater, comma reverse coater, multiple coater, die coater, lip coater, lip reverse coater, direct gravure coater, offset gravure coater, three-roll bottom reverse coater, and four-roll bottom reverse coater.

The support film is unwound from a supply roll in the film coater, passed across the head of the film coater where the resin solution is coated onto the support film to the predetermined buildup, and then moved through a hot air circulating oven at a predetermined temperature for a predetermined time, where the coating is dried on the support into a resin coating, obtaining a dry film. If necessary, the dry film and a protective film which is unwound from another supply roll in the film coater are passed across a laminate roll under a predetermined pressure whereby the protective film is bonded to the resin coating on the support film, whereupon the laminate is wound up on a take-up shaft in the film coater, obtaining a protective film-bearing dry film. Preferably, the oven temperature is 25 to 150°C, the pass time is 1 to 100 minutes, and the bonding pressure is 0.01 to 5 MPa.

The support film used herein may be a single film or a multilayer film consisting of a plurality of stacked layers. Examples of the film material include synthetic resins such as polyethylene, polypropylene, polycarbonate and polyethylene terephthalate (PET). Of these resins, PET is preferred for appropriate flexibility, mechanical strength and heat resistance. These films may have been pretreated such as by corona treatment or coating of a release agent. Such films are commercially available, for example, Cerapeel^{®} WZ(RX) and Cerapeel^{®} BX8(R) from Toray Advanced Film Co., Ltd.; E7302 and E7304 from Toyobo Co., Ltd.; Purex^{®} G31 and Purex^{®} G71T1 from Teijin DuPont Films Japan Ltd.; and PET38×1-A3, PET38×1-V8 and PET38×1-X08 from Nippa Co., Ltd.

The protective film used herein may be similar to the support film. Among others, PET and polyethylene films having an appropriate flexibility are preferred. Such films are also commercially available. For example, PET films are as mentioned above, and polyethylene films include GF-8 from Tamapoly Co., Ltd. and PE film 0 type from Nippa Co., Ltd.

Both the support and protective films preferably have a thickness of 10 to 100 µm, more preferably 25 to 50 µm, for consistent manufacture of dry film, and prevention of wrapping or curling on a take-up roll.

A laminating method for disposing the dry film on a flat or rugged substrate is not particularly limited. One exemplary method involves peeling the protective film from the dry film, setting the vacuum chamber of a vacuum laminator (trade name TEAM-300 by Takatori Corp.) at a vacuum of 50 to 1,000 Pa, preferably 50 to 500 Pa, specifically 100 Pa, tightly bonding the resin film on the support film to a substrate at 80 to 300°C, resuming the atmospheric pressure, cooling the substrate to room temperature, taking the substrate out of the vacuum laminator, and peeling the support film.

### EXAMPLES

Examples and Comparative Examples are given below for illustrating the invention, but the invention is not limited thereto. In Examples, the Mw of a polymer is measured by GPC versus monodisperse polystyrene standards using GPC column TSKGEL Super HZM-H (Tosoh Corp.) under analytical conditions: flow rate 0.6 mL/min, tetrahydrofuran eluent, and column temperature 40°C.

The compounds used in the synthesis of polymers are shown below.

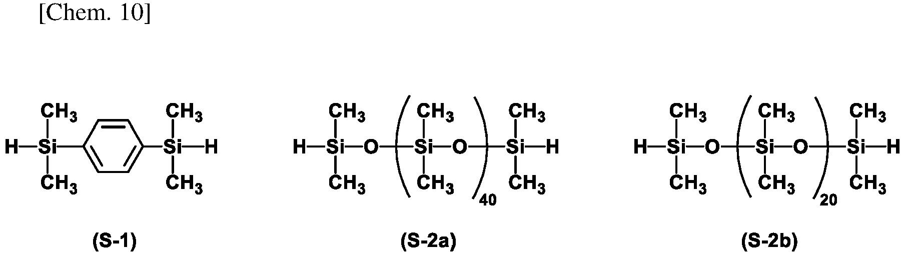

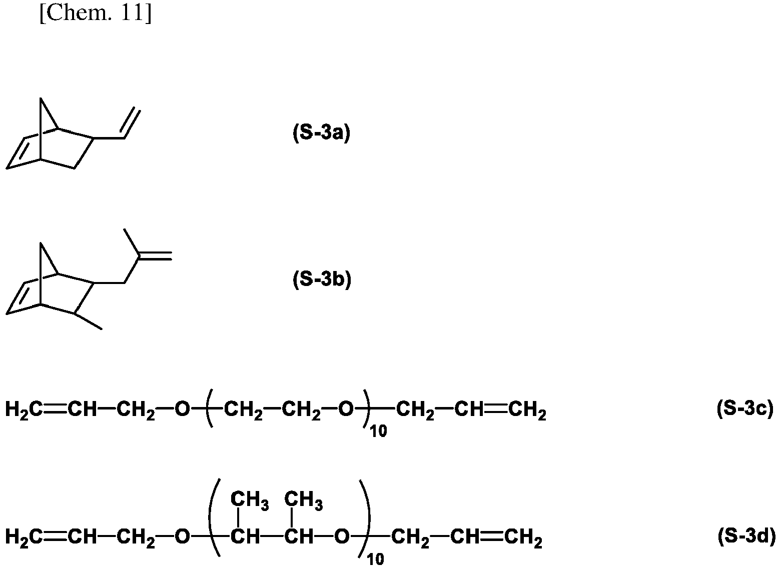

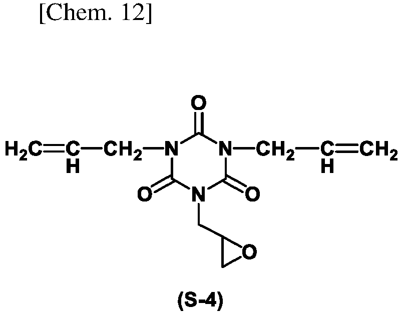

### [Example 1] Synthesis of Polymer P-1

A 10-L flask equipped with a stirrer, thermometer, nitrogen purge line and reflux condenser was charged with 92.8 g (0.35 mol) of Compound (S-4) and 105.3 g (0.65 mol) of Compound (S-3b), then with 2,000 g of toluene, and heated at 70°C. Thereafter, 1.0 g of a toluene solution of chloroplatinic acid (platinum concentration 0.5 wt%) was admitted, whereupon 194.0 g (1.00 mol) of Compound (S-1) was added dropwise over 1 hour ((total of hydrosilyl groups)/(total of carbon-carbon double bonds) molar ratio = 1:1). At the end of dropwise addition, the reaction solution was aged for 2 hours while heating at 100°C. Finally, toluene was distilled off in vacuum from the solution, obtaining Polymer P-1. On analysis of Polymer P-1 by ¹H-NMR spectroscopy (Bruker Corp.), the peak near 4.5 ppm indicative of the presence of SiH groups was not detected. On analysis by FT-IR (Shimadzu Corp.), the peak near 2,200 cm⁻¹ indicative of the presence of SiH groups was not detected. The Mw was 4,000 as measured by GPC. These data attested that the polymer contained repeat units A1 and A2.

### [Example 2] Synthesis of Polymer P-2

A 10-L flask equipped with a stirrer, thermometer, nitrogen purge line and reflux condenser was charged with 53.0 g (0.20 mol) of Compound (S-4) and 96.8 g (0.80 mol) of Compound (S-3a), then with 2,000 g of toluene, and heated at 70°C. Thereafter, 1.5 g of a toluene solution of chloroplatinic acid (platinum concentration 0.5 wt%) was admitted, whereupon 194.0 g (1.00 mol) of Compound (S-1) was added dropwise over 1 hour ((total of hydrosilyl groups)/(total of carbon-carbon double bonds) molar ratio = 1:1). At the end of dropwise addition, the reaction solution was aged for 8 hours while heating at 100°C. Finally, toluene was distilled off in vacuum from the solution, obtaining Polymer P-2. On analysis of Polymer P-2 by ¹H-NMR spectroscopy (Bruker Corp.), the peak near 4.5 ppm indicative of the presence of SiH groups was not detected. On analysis by FT-IR (Shimadzu Corp.), the peak near 2,200 cm⁻¹ indicative of the presence of SiH groups was not detected. The Mw was 41,000 as measured by GPC. These data attested that the polymer contained repeat units A1 and A2.

### [Example 3] Synthesis of Polymer P-3

A 10-L flask equipped with a stirrer, thermometer, nitrogen purge line and reflux condenser was charged with 13.3 g (0.05 mol) of Compound (S-4) and 115.0 g (0.95 mol) of Compound (S-3a), then with 2,000 g of toluene, and heated at 70°C. Thereafter, 2.0 g of a toluene solution of chloroplatinic acid (platinum concentration 0.5 wt%) was admitted, whereupon 194.0 g (1.00 mol) of Compound (S-1) was added dropwise over 1 hour ((total of hydrosilyl groups)/(total of carbon-carbon double bonds) molar ratio = 1:1). At the end of dropwise addition, the reaction solution was aged for 20 hours while heating at 100°C. Finally, toluene was distilled off in vacuum from the solution, obtaining Polymer P-3. On analysis of Polymer P-3 by ¹H-NMR spectroscopy (Bruker Corp.), the peak near 4.5 ppm indicative of the presence of SiH groups was not detected. On analysis by FT-IR (Shimadzu Corp.), the peak near 2,200 cm⁻¹ indicative of the presence of SiH groups was not detected. The Mw was 83,000 as measured by GPC. These data attested that the polymer contained repeat units A1 and A2.

### [Comparative Example 1] Synthesis of Comparative Polymer CP-1

A 10-L flask equipped with a stirrer, thermometer, nitrogen purge line and reflux condenser was charged with 26.5 g (0.10 mol) of Compound (S-4) and 108.9 g (0.90 mol) of Compound (S-3a), then with 2,000 g of toluene, and heated at 70°C. Thereafter, 1.0 g of a toluene solution of chloroplatinic acid (platinum concentration 0.5 wt%) was admitted, whereupon 184.3 g (0.95 mol) of Compound (S-1) and 9.3 g (0.05 mol) of Compound (S-2b) were added dropwise over 1 hour ((total of hydrosilyl groups)/(total of carbon-carbon double bonds) molar ratio = 1:1). At the end of dropwise addition, the reaction solution was aged for 6 hours while heating at 100°C. Finally, toluene was distilled off in vacuum from the solution, obtaining Comparative Polymer CP-1 having a siloxane unit content of 19.9% by weight. Comparative Polymer CP-1 had a Mw of 15,000.

### [Comparative Example 2] Synthesis of Comparative Polymer CP-2

A 10-L flask equipped with a stirrer, thermometer, nitrogen purge line and reflux condenser was charged with 238.5 g (0.90 mol) of Compound (S-4) and 16.2 g (0.10 mol) of Compound (S-3b), then with 2,000 g of toluene, and heated at 70°C. Thereafter, 1.0 g of a toluene solution of chloroplatinic acid (platinum concentration 0.5 wt%) was admitted, whereupon 184.3 g (0.95 mol) of Compound (S-1) and 79.3 g (0.05 mol) of Compound (S-2b) were added dropwise over 1 hour ((total of hydrosilyl groups)/(total of carbon-carbon double bonds) molar ratio = 1:1). At the end of dropwise addition, the reaction solution was aged for 6 hours while heating at 100°C. Finally, toluene was distilled off in vacuum from the solution, obtaining Comparative Polymer CP-2 having a siloxane unit content of 15.3% by weight. Comparative Polymer CP-2 had a Mw of 7,000.

### [Comparative Example 3] Synthesis of Comparative Polymer CP-3

A 10-L flask equipped with a stirrer, thermometer, nitrogen purge line and reflux condenser was charged with 79.5 g (0.30 mol) of Compound (S-4) and 377.3 g (0.70 mol) of Compound (S-3c), then with 2,000 g of toluene, and heated at 70°C. Thereafter, 1.0 g of a toluene solution of chloroplatinic acid (platinum concentration 0.5 wt%) was admitted, whereupon 174.6 g (0.90 mol) of Compound (S-1) and 158.5 g (0.10 mol) of Compound (S-2b) were added dropwise over 1 hour ((total of hydrosilyl groups)/(total of carbon-carbon double bonds) molar ratio = 1:1). At the end of dropwise addition, the reaction solution was aged for 6 hours while heating at 100°C. Finally, toluene was distilled off in vacuum from the solution, obtaining Comparative Polymer CP-3 having a siloxane unit content of 20.1% by weight. Comparative Polymer CP-3 had a Mw of 83,000.

### [Comparative Example 4] Synthesis of Comparative Polymer CP-4

A 10-L flask equipped with a stirrer, thermometer, nitrogen purge line and reflux condenser was charged with 132.5 g (0.50 mol) of Compound (S-4) and 409.0 g (0.50 mol) of Compound (S-3d), then with 2,000 g of toluene, and heated at 70°C. Thereafter, 1.0 g of a toluene solution of chloroplatinic acid (platinum concentration 0.5 wt%) was admitted, whereupon 174.6 g (0.90 mol) of Compound (S-1) and 302.0 g (0.10 mol) of Compound (S-2a) were added dropwise over 1 hour ((total of hydrosilyl groups)/(total of carbon-carbon double bonds) molar ratio = 1:1). At the end of dropwise addition, the reaction solution was aged for 6 hours while heating at 100°C. Finally, toluene was distilled off in vacuum from the solution, obtaining Comparative Polymer CP-4 having a siloxane unit content of 29.7% by weight. Comparative Polymer CP-4 had a Mw of 103,000.

### [Light transmission test]

Each of Polymers P-1 to P-3 and Comparative Polymers CP-1 to CP-4 was dissolved in cyclopentanone to form a resin solution having a polymer concentration of 50% by weight. The resin solution was coated onto a glass substrate and heated at 100°C for 5 minutes and further heated in nitrogen atmosphere at 190°C for 2 hours, obtaining a resin coating having a thickness of 10 µm. The resin coating was measured for transmittance to light of wavelength 400 nm, with the results shown in Table 1.

**[Table 1]**

| | Example | | | Comparative Example | | | |
|---|---|---|---|---|---|---|---|
| | 1 | 2 | 3 | 1 | 2 | 3 | 4 |
| Polymer | P-1 | P-2 | P-3 | CP-1 | CP-2 | CP-3 | CP-4 |
| Light transmittance (%, 405 nm) | 98 | 99 | 97 | 99 | 96 | 96 | 99 |

### [Light resistance test]

A sample was the coating on a glass wafer prepared above. In an oven set at 100°C, the sample was continuously irradiated with laser light of 400 nm and 1 W for 1,000 hours, after which the surface state of the sample was observed. The sample was rated rejected (×) when oil bleeding was found and acceptable (○) when unchanged from the initial. The results are shown in Table 2.

**[Table 2]**

| | Example | | | Comparative Example | | | |
|---|---|---|---|---|---|---|---|
| | 1 | 2 | 3 | 1 | 2 | 3 | 4 |
| Polymer | P-1 | P-2 | P-3 | CP-1 | CP-2 | CP-3 | CP-4 |
| Light resistance | ○ | ○ | ○ | × | × | × | × |

### [Preparation of protective film-bearing dry film]

A die coater was used as the film coater and a polyethylene terephthalate (PET) film of 38 µm thick used as the support film. Each of the solutions of Polymers P-1 to P-3 and Comparative Polymers CP-1 to CP-4 in cyclopentanone in a concentration of 55% by weight was coated onto the support film. The coated film was passed through a hot air circulating oven (length 4 m) set at 100°C over 5 minutes for drying to form a resin coating on the support film, yielding a dry film. Using a laminating roll, a polyethylene film of 50 µm thick as the protective film was bonded to the resin coating under a pressure of 1 MPa. The resin coating/protective film laminate was taken up on a take-up roll of the film coater, yielding a protective film-bearing dry film. Each resin coating had a thickness of 100 µm.

The protective film-bearing dry film as unwound from the take-up roll was observed. Those samples in which the resin coating had cracked, in which on peeling of the protective film, the resin coating was kept bonded to the protective film so that the resin coating was stripped from the support film, and in which the resin coating cracked on peeling of the protective film and was no longer bonded to a substrate or the like were rated rejected (×) as they were judged difficult to manufacture a protective film-bearing dry film. Those samples in which no anomalies occurred were rated acceptable (○) as they were judged possible to manufacture a protective film-bearing dry film. The results are shown in Table 3.

**[Table 3]**

| | Example | | | Comparative Example | | | |
|---|---|---|---|---|---|---|---|
| | 1 | 2 | 3 | 1 | 2 | 3 | 4 |
| Polymer | P-1 | P-2 | P-3 | CP-1 | CP-2 | CP-3 | CP-4 |
| Manufacture of protective film-bearing dry film | ○ | ○ | ○ | × | × | × | × |

As evident from the above results, polymers having a backbone consisting of a silphenylene skeleton, an epoxy-containing isocyanuric acid skeleton, and a norbornene skeleton can be synthesized and provided according to the invention. Resin coatings obtained from the polymers have high transparency and high light resistance enough to avoid oil bleeding. Using the resin coatings, protective film-bearing dry films can be provided.

## Claims

1. A polymer having a backbone which contains a silphenylene skeleton, an epoxy-containing isocyanuric acid skeleton, and a norbornene skeleton, and is free of a siloxane skeleton.

2. The polymer of claim 1, having a weight average molecular weight of 3,000 to 100,000.

3. The polymer of claim 1 or 2, comprising repeat units having the formula (A1) and repeat units having the formula (A2): 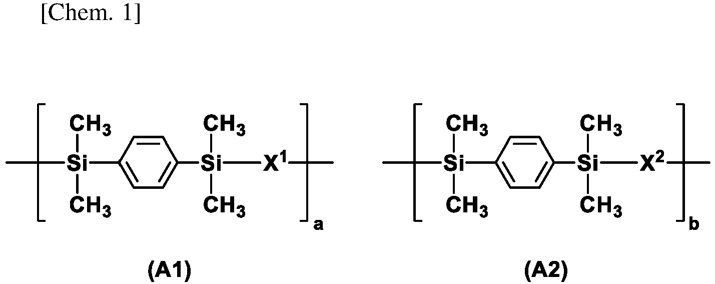
wherein a and b are positive numbers meeting 0 < a < 1, 0 < b < 1, and a+b = 1, X¹ is a divalent group having the formula (X1): 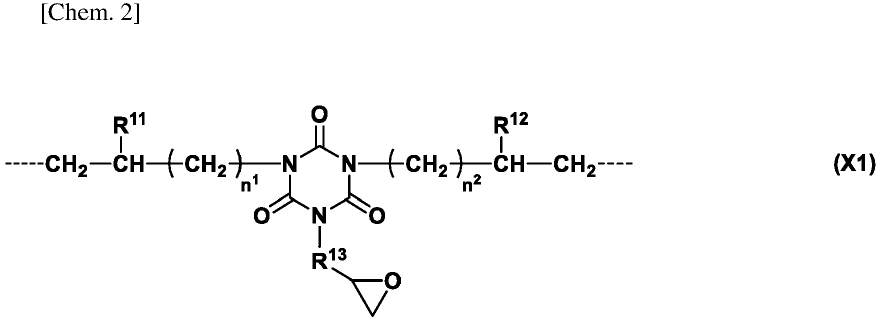
wherein R¹¹ and R¹² are each independently hydrogen or methyl, R¹³ is a C₁-C₈ hydrocarbylene group in which an ester bond or ether bond may intervene in a carbon-carbon bond, n¹ and n² are each independently an integer of 0 to 7, the broken line designates a valence bond, and X² is a divalent group having the formula (X2): 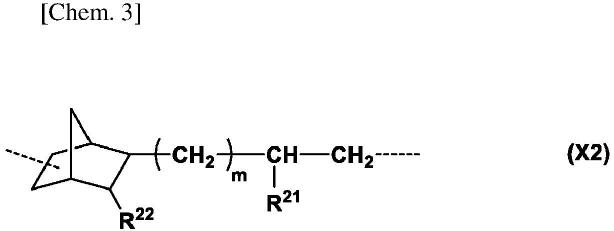
wherein R²¹ and R²² are each independently hydrogen or a C₁-C₂₀ saturated hydrocarbyl group which may contain a heteroatom, m is 0 or an integer of 1 to 10, and the broken line designates a valence bond.

4. The polymer of claim 3 wherein a is 0 < a ≤ 0.35.

5. A resin coating comprising the polymer of any one of claims 1 to 4.

6. The resin coating of claim 5 wherein the coating having a thickness of 10 µm has a transmittance of at least 95% to light of wavelength 405 nm.

7. A protective film-bearing dry film comprising a support film, the resin coating of claim 5 on the support film, and a protective film on the resin coating.
